# EUROPÄISCHE PATENTANMELDUNG

(11) **EP 1 944 568 A2**
(43) Veröffentlichungstag der Anmeldung: **16.07.2008**
(21) Anmeldenummer: 07023707.8
(22) Anmeldetag: 07.12.2007
(51) Int. Cl.: G01B 7/02

(54) **Anordnung zur Messung der Position eines Magneten relativ zu einem Magnetkern**

(30) Priorität: 10.01.2007 DE 102007001606
(71) Anmelder: Vacuumschmelze GmbH & Co. KG, 63450 Hanau (DE)
(72) Erfinder: Beichler, Johannes, Dr., 64859 Eppertshausen (DE); Heumann, Dirk, Dr., 61130 Nidderau (DE); Preusse, Norbert, Dr., 63755 Alzenau (DE)
(74) Vertreter: Schmuckermaier, Bernhard

(57) **Zusammenfassung**

Anordnung zur Messung der Position eines Magneten relativ zu einem ferromagnetischen Magnetkern, mit einem Magnetkern, mit einem Leiter, der derart durch den Ringkern geführt ist, dass Leiter und Ringkern eine induktive Anordnung bilden, und mit einer Auswerteschaltung zur Auswertung des Sättigungszustandes des Ringkernes der induktiven Anordnung als Maß für die Abstand des Magneten relativ zum Magnetkern.

## Beschreibung

Die vorliegende Erfindung betrifft eine Sensoranordnung mit einem oder mehreren Magnetkernen, beispielsweise Ringkernen oder Mikroringkernen, zur Messung der Position eines Magneten relativ zu diesen Ringkernen.

In vielen Anwendungen muss die Position eines Geberelementes zur Messung eben dieser Position oder auch nur zum Auslösen von Schaltvorgängen erfasst werden. Aus Gründen der Robustheit und der Einfachheit kommen dazu meist nur berührungslose Messmethoden in Frage und so bieten sich grundsätzlich zwei Möglichkeiten an, nämlich eine optische oder eine magnetische Erfassung der Position des Geberelementes. In rauen Umgebungen haben optische Methoden jedoch den Nachteil verschmutzungs- und störanfällig zu sein, so dass hier die notwendige Robustheit im Allgemeinen nicht erreicht und in der Regel magnetischen Methoden der Vorzug gegeben wird. Als Geberelement dient dabei häufig ein Magnet, beispielsweise ein Dauermagnet, dessen Position erfasst werden soll.

Zur Erfassung der Position eines Magneten sind mehrere Möglichkeiten bekannt. Eine Möglichkeit dazu ist beispielsweise die direkte Messung des Magnetfeldes mit Hilfe von Hallelementen oder magnetoresistiven Sensoren. Das Ausgangssignal dieser Sensoren ist - bei einer entsprechenden Anordnung von Magnet und Sensor - proportional zum Magnetfeld des betrachteten Gebermagneten, woraus sich die Position desselben bestimmen lässt. Derartige Magnetfeldsensoren weisen jedoch ungewünschte Offset-Spannungen und Temperaturdriften auf, was eine ausreichend genaue Messung erschwert. Hallelemente haben darüber hinaus den Nachteil, dass zu ihrer Ansteuerung sehr hohe Magnetfelder notwendig sind.

Eine andere Methode zur Erfassung der Position eines Gebermagneten verwendet ein oder mehrere Reed-Relais. Pro zu erfassende Position wird ein Reed-Relais benötigt, welches durchschaltet, wenn der Gebermagnet dem Reed-Relais ausreichend nahe kommt. Reed-Relais als magnetomechanische Schalter unterliegen jedoch immer einem gewissen Verschleiß und sind nur für eine gewisse Anzahl von Schaltspielen ausgelegt. Darüber hinaus haben sie naturgemäß verhältnismäßig lange Ansprechzeiten von 5 ms oder mehr. Kürzere Zeiten sind nur mit rein elektronischen Lösungen möglich, beispielsweise mit Hall-Schaltern, welche jedoch die oben genannten Probleme wie Offset und Temperaturdrift aufweisen. Bei mechanischen Schaltern sind zudem häufig Maßnahmen zur Entprellung notwendig.

Der vorliegenden Erfindung liegt die Aufgabe zugrunde, eine Sensoranordnung zur magnetischen berührungslosen Positionsmessung zur Verfügung zu stellen, welch ein exaktes und reproduzierbares Schaltverhalten mit entsprechend kurzen Schaltzeiten ermöglicht.

Diese Aufgabe wird durch eine Anordnung gemäß Patentanspruch 1 gelöst, verschiedene Ausführungsformen und Weiterentwicklungen sind Gegenstand der Unteransprüche.

Die vorliegende Erfindung verbindet die Vorteile der oben genannten magnetomechanischen Methode, nämlich ein exakt reproduzierbares Schaltverhalten ohne Offset- und Drifterscheinungen, mit den Vorteilen der oben genannten elektronischen Methode, nämlich ein entsprechend schnelles Schaltverhalten ohne mechanische Verschleißerscheinungen.

Erfindungsgemäß ist als Sensorelement ein ferromagnetischer Magnetkernkern, insbesondere ein Mikroringkern, vorgesehen, welcher durch das Magnetfeld des Gebermagneten magnetisch gesättigt wird, sobald der Gebermagnet sich nahe genug bei dem Mikroringkern befindet. Diese Mikroringkerne weisen typischerweise im ungesättigten Zustand eine sehr hohe relative Permeabilität (größer 20000) auf, im gesättigten Zustand hingegen kann die relative Permeabilität bis auf den Wert 1 sinken.

Der Sättigungszustand eines Magnetkernskerns kann leicht mit Hilfe eines benachbart zu dem Kern angeordneten elektrischen Leiters detektiert werden. Eine solche Anordnung wird im Folgenden als "induktive Anordnung" bezeichnet. Bei einer Ausführungsform mit Mikroringkern kann der Leiter zumindest einmal durch den Kern durchgeführt sein.

Bei einem ungesättigten Kern weist die induktive Anordnung eine sehr hohe Induktivität auf. Wird der Magnetkern jedoch durch den Gebermagneten magnetisch gesättigt, so verringert sich der Wert der Induktivität erheblich. Diese Induktivitätsänderung wird erfindungsgemäß durch eine Auswerteschaltung ermittelt, wobei zwischen der Position des Gebermagneten relativ zu dem betrachteten Magnetkern und der ermittelten Induktivität ein monoton verlaufender funktionaler Zusammenhang besteht, d. h. bei kleiner werdendem Abstand zwischen Gebermagnet und Magnetkern wird auch die Induktivität der induktiven Anordnung aus Magnetkern und Leiter geringer.

Wird in der Auswerteschaltung der Induktivitätswert der induktiven Anordnung nicht direkt gemessen, sondern lediglich mit einem Referenzwert verglichen und stellt man das Ergebnis dieser Vergleichsoperation an einem Ausgang als binäres Logiksignal zur Verfügung, so wirkt eine solche induktive Anordnung aus Magnetkern und Leiter bei einer Annäherung des Gebermagneten ähnlich wie ein Reed-Relais, ohne jedoch die für mechanische Schalter üblichen Nachteile (wie zum Beispiel Prellen und lange Schaltzeiten) aufzuweisen. Auch Drift- und Offseterscheinungen, wie sie bei anderen magnetischen Sensoren auftreten, sind bei dieser Anordnung nicht vorhanden.

In einer weiteren Ausführungsform der Erfindung wird nicht nur ein einzelner Magnetkern mit einem elektrischen Leiter verwendet, sondern es sind eine Vielzahl von induktiven Anordnungen mit jeweils einem Kern in regelmäßigen oder unregelmäßigen Abständen voneinander angeordnet. Bewegt sich nun der Gebermagnet über diese Anordnung von Magnetkernen, so lässt sich in einfacher Weise die Position des Gebermagneten bestimmen; er befindet sich an der Stelle jenes Magnetkerns, der gerade "durchgeschalten", d. h. magnetisch gesättigt ist.

Bei der Verwendung von Ringkernen ist im einfachsten Fall je ein Leiter durch jeden Ringkern nur ein einziges Mal hindurchgeführt. Bei der Verwendung von Mikroringkernen kann dieser Aufbau sehr einfach auf einer Platine oder in mehreren Schichten einer Multilayerplatine angeordnet werden. Um das "Schaltverhalten" der Ringkerne zu verbessern kann eine weichmagnetische Platte, beispielsweise aus Mumetall (Ni77/Fe14/Cu5/MO4), auf der dem Gebermagneten abgewandten Seite der Ringkerne angeordnet sein. Dadurch werden die Magnetfeldlinien des Gebermagneten von der Platte "angezogen", der magnetische Fluss wird in der Platte geführt und es entsteht weniger Streufluss, wodurch wiederum das Schaltverhalten schärfer wird, d. h. der Übergang von hoher Induktivität zu niedriger Induktivität wird steiler. Diese weichmagnetische Platte kann auch als Folie in einer Multilayerplatine realisiert werden.

Eine weitere Erhöhung der Ortsauflösung einer solcher Anordnung kann dadurch erreicht werden, dass der Gebermagnet derart auf die Entfernung zwischen zwei Magnetkernen abgestimmt ist, dass zwei benachbarte Kerne gesättigt sind, wenn der Gebermagnet sich genau zwischen ihnen befindet.

Bei den verwendeten Mikroringkernen handelt es sich beispielsweise um Ringkerne, welche aus amorphen oder nanokristallinen Folien mit Dicken von maximal 30 µm und relativen Permeabilitäten von mindestens 20000 gebildet sind, entweder in Form eines gewickelten Ringbandkerns oder in Form einer aus einer solchen Folie gestanzten Scheibe. Es ist dabei auch möglich, einen Ringkern aus mehreren solcher Stanzscheiben bis zu einer Höhe von maximal 1,0 mm aufzubauen. Derartig aufgebaute Ringkerne lassen sich leicht in Multilayerplatinen integrieren und sind beispielsweise in der deutschen Patentschrift DE 199 07 542 C2 beschrieben. Eine andere Möglichkeit ist wie oben erwähnt die Verwendung der oben genannten Folie zur Fertigung von Miniatur-Ringbandkernen mit einer Wickelhöhe von maximal 0,3 mm, einer Kernhöhe von maximal 2 mm und einem Durchmesser von maximal 2 mm. Die Herstellung derartiger Miniatur-Ringbandkerne ist beispielsweise in der deutschen Patentschrift DE 198 51 871 T2 beschrieben.

Wird die Sensoranordnung mit Hilfe derartiger Miniaturkerne aufgebaut, so lassen sich Ringkerne und Auswerteschaltung auf derselben Platine unterbringen und so ein kompaktes Sensormodul zur Positionserfassung realisieren.

Die Erfindung wird im Folgenden anhand von Figuren näher erläutert. Dabei zeigt:
- Figur 1: eine erfindungsgemäße Sensoranordnung mit mehreren in regelmäßigen Abständen entlang einer Linie angeordneten Ringkernen, wobei durch jeden Ringkern ein Leiter führt, der mit einer Auswerteschaltung verbunden ist.
- Figur 2: eine mögliche Auswerteschaltung, welche es erlaubt, den Sättigungszustand sämtlicher Ringkerne parallel abzufragen.
- Figur 3: die erfindungsgemäße Sensoranordnung wie in Figur 1, jedoch mit einer zusätzlichen weichmagnetischen Platte auf der dem Gebermagneten abgewandten Seite der Ringkerne.
- Figur 4: die erfindungsgemäße Sensoranordnung wie in Figur 1, jedoch im Querschnitt dargestellt. Es wird die Möglichkeit der Vergrößerung des Auflösungsvermögens der Sensoranordnung dargestellt, wenn der Magnet derart auf den Abstand zwischen den Ringkernen abgestimmt ist, dass zwei benachbarte Ringkerne gesättigt sind, wenn sich der Magnet genau zwischen den beiden Kernen befindet.

In den Figuren bezeichnen, sofern nicht anders angegeben, gleiche Bezugszeichen gleiche Komponenten mit gleicher Bedeutung.

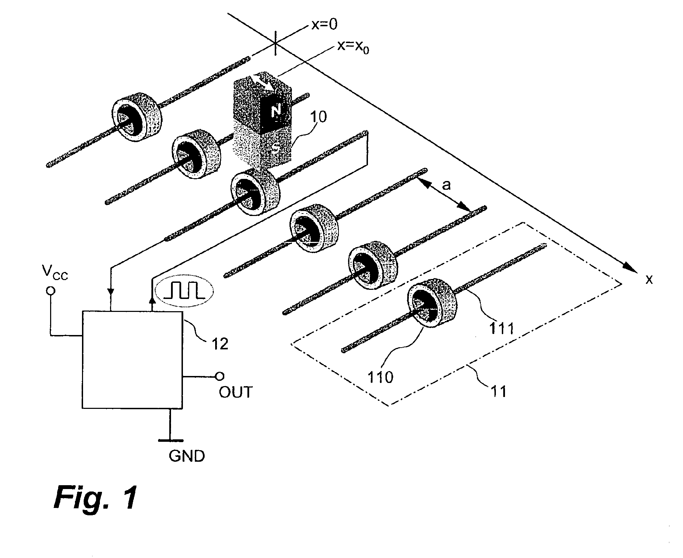

Die Figur 1 zeigt eine mögliche erfindungsgemäße Sensoranordnung mit mehreren in regelmäßigen Abständen a angeordneten Ringkernen 110, durch die jeweils ein Leiter 111 geführt ist. Durch das Durchführen je eines Leiters 111 durch jeweils einen Ringkern 110 werden induktive Anordnungen 11 gebildet, die alle mit der Auswerteschaltung 12 verbunden sind. (In der Figur ist der Übersichtlichkeit halber nur die Verbindung von einer induktiven Anordnung 11 zur Auswerteschaltung 12 eingezeichnet.) Sämtliche Ringkerne 110 sind entlang einer Geraden angeordnet, die gleichzeitig auch die Koordinatenachse x darstellt, wobei ein erster Ringkern 110 im Ursprung des Koordinatensystems x=0 angeordnet ist. Ein Permanentmagnet als Gebermagnet 10 ist derart über dem Ringkernen 110 angeordnet, dass er entlang der Koordinatenachse x über die Ringkerne hinweg verschiebbar ist. Die Magnetisierungsrichtung des Gebermagneten kann so sein wie in Figur 1 dargestellt; die beiden dazu orthogonalen Möglichkeiten sind ebenfalls denkbar und führen zu einem in Bezug auf Breite des Schottbereiches und Abstand modifizierten Ansprechverhalten. Die jeweils aktuelle Position des Gebermagneten 10 wird durch die Koordinate x=x0 beschrieben. Die Koordinaten sämtlicher induktiven Anordnungen 11 bzw. sämtlicher Ringkerne 110 sind a priori bekannt, so dass sich nach einer Bestimmung des Sättigungszustandes sämtlicher Ringkerne 110 Folgendes schließen lässt: Der Gebermagnet 10 befindet sich an derselben Koordinatenposition x0, wie jener Ringkern 110, der gerade magnetisch gesättigt ist. Für diesen einfachen Fall sollte der Gebermagnet 10 so dimensioniert, d. h. auf den Abstand der Ringkerne 110 abgestimmt sein, dass je nach Position des Gebermagneten 10 jeweils nur ein einziger Ringkern 110 (nämlich der dem Gebermagneten 10 am nächsten liegende) magnetisch gesättigt ist.

Nach der Feststellung welcher der Ringkerne gerade gesättigt ist, lässt sich die Position des Gebermagneten 10 eindeutig zuordnen. Die Auflösung dieser Sensoranordnung ist dann durch den Abstand a zwischen zwei benachbarten induktiven Anordnungen 11 gegeben. Wie dennoch das Auflösungsvermögen der Sensoranordnung erhöht werden kann wird weiter unten beschrieben.

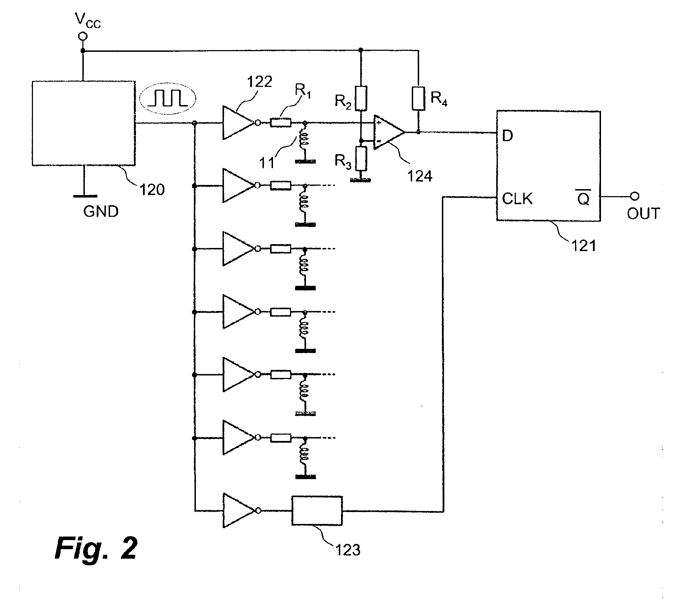

Sämtliche induktiven Anordnungen 11 sind mit der Auswerteschaltung 12 verbunden. Des Weiteren weist die Auswerteschaltung 12 eine Verbindung zu einem ersten Versorgungspotential Vcc und zu einem zweiten Versorgungspotential GND auf. An einem Ausgang OUT wird anzeigt, welcher der Ringkerne 110 gerade magnetisch gesättigt ist. Eine derartige Auswerteschaltung 12 ist beispielhaft in Figur 2 dargestellt.

Die Auswerteschaltung umfasst einen Oszillator 120 mit einer Oszillatorfrequenz fₒ, welcher über Inverter 122 und Widerstände R₁ mit den induktiven Anordnungen 11 verbunden ist und diese mit einer Rechteckschwingung anregt. Die induktiven Anordnungen 11 und die Widerstände R1 bilden jeweils Hochpässe mit der Grenzfrequenz f_{G} = R₁/(2 π L), wobei L die momentane Induktivität der betrachteten induktiven Anordnung 11 bezeichnet. Diese Induktivität L weist bei einem gesättigten Ringkern eine niedrige Induktivität L=L_{G}, bei einem ungesättigten Ringkern 110 eine hohe Induktivität L=L_{U} auf. Mit dem Sättigungszustand der Ringkerne ändert sich somit nicht nur die Induktivität L der induktiven Anordnung 11, sondern auch die Grenzfrequenz f_{G} des zu der jeweiligen induktiven Anordnung 11 gehörenden Hochpasses.

Sind nun die Widerstände R₁ derart auf die Oszillatorfrequenz fₒ abgestimmt, dass bei gesättigtem Ringkern 110 die Grenzfrequenz f_{G} des dazugehörigen Hochpasses über der Oszillatorfrequenz fo und bei ungesättigtem Ringkern 110 unter der Oszillatorfrequenz fo liegt, dann lässt sich in einfacher Weise mit einem Komparator 124 entscheiden, ob der jeweilige Ringkern 110 gesättigt ist oder nicht und somit auch entscheiden ob sich der Gebermagnet an der Koordinatenposition des jeweiligen Ringkerns 110 befindet oder nicht. Zu diesem Zwecke ist ein erster Eingang des Komparators 124 mit dem Hochpass, d. h. mit dem Widerstand R₁ und der induktiven Anordnung 11 verbunden. Der Referenzwert, mit dem der Komparator das Ausgangssignal des Hochpasses vergleicht, wird über die Widerstände R₂ und R₃ eingestellt. Ein zweiter Eingang des Komparators 124 ist also über den Widerstand R₃ mit dem zweiten Versorgungspotential GND und über dem Widerstand R₂ mit dem ersten Versorgungspotential V_{cc} verbunden, die Widerstände R₂ und R₃ bilden somit einen Spannungsteiler. Am Ausgang des Komparators 124 wird das Vergleichsergebnis als Logikpegel dargestellt, wobei ein High-Pegel einen gesättigten Ringkern 110 anzeigt.

Damit dieses Ausgangssignal des Komparators 124 auch weiterverarbeitet werden kann, ist es mit dem D-Eingang eines flankengetriggerten D-Latch verbunden, dessen CLK-Eingang über eine Verzögerungsschaltung 123 und einen Inverter ebenfalls mit dem Oszillator 120 verbunden ist. Die Verzögerungszeit der Verzögerungsschaltung 123 ist genau so eingestellt, dass das D-Latch das Ausgangssignal des Komparators 124 genau zu jenem Zeitpunkt "abtastet", zu dem der Komparator 124 einen stabilen Zustand angenommen hat. Das Vergleichsergebnis des Komparators 124 steht dann am Ausgang OUT₀ des D-Latch 121 zur Weiterverarbeitung zur Verfügung. Die Widerstände R₂ bis R₄, sowie der Inverter 122, der Komparator 124 und das D-Latch 121 sind natürlich einmal pro induktiver Anordnung 11 vorhanden, auch wenn diese Komponenten der Übersichtlichkeit halber in der Figur 2 nur einmal für die erste induktive Anordnung eingezeichnet sind. Bei einer Sensoranordnung mit sechs Ringkernen 110, wie in der Figur 1 dargestellt, sind also auch sechs Inverter 122, sechs Komparatoren 124 mit den dazugehörigen Widerständen und sechs D-Latches 121 mit sechs Ausgängen OUT₀ bis OUT₆ vorhanden. An den Ausgängen OUT₀ bis OUT₆ wird angezeigt, welcher der Ringkerne gerade in Sättigung ist. Die zeitliche Auflösung, d. h. die Reaktionszeit auf eine Änderung im Sättigungszustand der Ringkerne wird allein durch die Oszillatorfrequenz fₒ bestimmt.

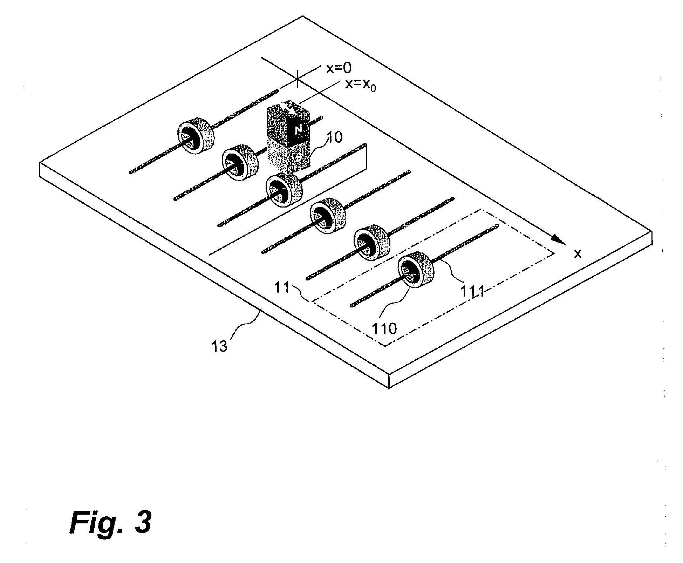

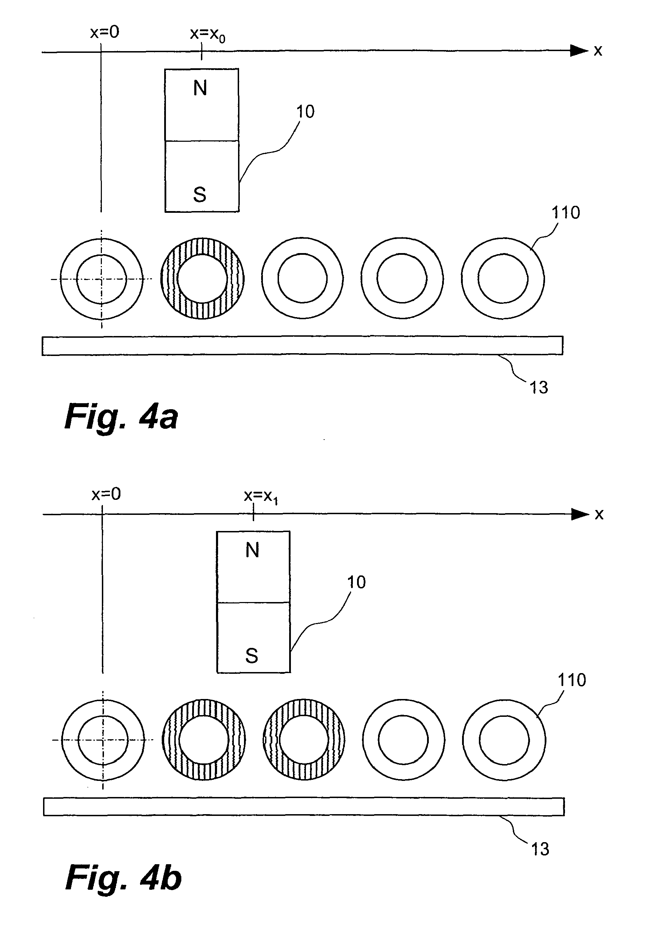

In der oben beschriebenen Ausführungsform wird die erreichbare Auflösung der Sensoranordnung durch den Abstand a zwischen zwei induktive Anordnungen 11 bestimmt. In den Figuren 3 und 4 ist nun eine Möglichkeit dargestellt, das Auflösungsvermögen der Sensoranordnung zu verdoppeln. Die Figur 3 zeigt eine Sensoranordnung, wie in Figur 1, jedoch ist zusätzlich auf der dem Gebermagneten 10 abgewandten Seite der induktive Anordnungen 11 eine weichmagnetische Platte 13 angeordnet. Ein geeignetes Material für die Platte 13 ist beispielsweise Mumetall. Die magnetischen Feldlinien des Gebermagneten 10 werden durch die weichmagnetische Platte 13 "angezogen", so dass eine bessere Führung des Magnetfeldes und eine Verringerung der Streuflüsse und damit ein besseres Schaltverhalten und einer Erhöhung der Genauigkeit erreicht wird.

Das Auflösungsvermögen der Sensoranordnung lässt sich nun dadurch verbessern, dass, wie in den Figuren 4a und 4b dargestellt, der Gebermagnet 10 derart auf den Abstand zwischen zwei Ringkernen 110 abgestimmt ist, dass nur ein Ringkern 110 gesättigt ist, wenn sich der Gebermagnet 10 genau über dem betreffenden Ringkern 110 befindet (vgl. Figur 4a) und dass zwei benachbarte Ringkerne 110 gesättigt sind, wenn sich der Gebermagnet 10 genau zwischen den beiden betrachteten Ringkernen 110 befindet (vgl. Figur 4b). Durch eine solche Dimensionierung können also auch Zwischenzustände detektiert werden und das Auflösungsvermögen der Sensoranordnung entspricht dann dem halben Abstand zwischen zwei benachbarten Ringkernen 110.

Wie bereits weiter oben erwähnt, können die Ringkerne in Multilayerplatinen integriert werden, sofern für die Ringkerne amorphe oder polykristalline ferromagnetische Folien verwendet werden. Die weichmagnetische Platte 13 kann dabei ebenso durch eine derartige Folie innerhalb einer Multilayerplatine gebildet werden.

## Patentansprüche

1. Anordnung zur Messung der Position eines Magneten (10) relativ zu einem Magnetkern (110), mit
- einem Magneten (10),
- einem ferromagnetischen Magnetkern (110),
- einem Leiter (111), der derart durch den Ringkern (110) geführt ist, dass Leiter (111) und Ringkern (110) eine induktive Anordnung (11) bilden, und mit einer
- Auswerteschaltung (12) zur Auswertung des Sättigungszustandes des Ringkernes (110) der induktiven Anordnung (11) als Maß für die Abstand (x) des Magneten (10) relativ zum Magnetkern (110).

2. Anordnung nach Anspruch 1, bei der der Magnetkern (110) als Ringkern ausgebildet ist.

3. Anordnung nach Anspruch 2, bei der der Ringkern (110) aus amorphen oder nanokristallinen Folien mit Dicken von maximal 30 µm und relativen Permeabilitäten von mindestens 20000 gebildet ist.

4. Anordnung nach einem der Ansprüche 2 oder 3, bei der der Ringkern (110) als Miniatur-Ringbandkern mit einer Wickelhöhe von maximal 0,3 mm ausgeführt ist.

5. Anordnung nach einem der Ansprüche 2 bis 4, bei der der Ringkern (110) eine Kernhöhe von maximal 2 mm.

6. Anordnung nach einem der vorhergehenden Ansprüche, bei der der Magnetkern (110) als Stanzscheibe mit einer Dicke von maximal 30µm ausgeführt ist.

7. Anordnung nach einem der vorhergehenden Ansprüche, bei der der Magnetkern (110) als Stapel von Stanzscheiben mit einer Höhe von maximal 1,0 mm ausgeführt ist.

8. Anordnung nach einem der vorhergehenden Ansprüche, bei der der Magnetkern (110) einen Durchmesser von maximal 2 mm aufweist.

9. Anordnung nach einem der vorhergehenden Ansprüche, bei der mehrere induktive Anordnungen (11) voneinander beabstandet angeordnet und mit der Auswerteschaltung verbunden sind.

10. Anordnung nach Anspruch 9, bei der die Auswerteschaltung (12) dazu ausgebildet ist, sämtliche induktive Anordnungen parallel auszuwerten.

11. Anordnung nach Anspruch 9, bei der die Auswerteschaltung (12) dazu ausgebildet ist, die induktive Anordnungen (11) sequenziell auszuwerten.

12. Anordnung nach einem der Ansprüche 9 bis 11, bei der die Leiter (111) jeweils nur einmal durch den korrespondierenden Ringkern (110) hindurchgeführt sind.

13. Anordnung nach einem der Ansprüche 9 bis 12, bei der die Auswerteschaltung einen Oszillator (120) aufweist und sämtliche induktiven Anordnungen (11) durch diesen Oszillator (120) angesteuert werden.

14. Anordnung nach einem der Ansprüche 9 bis 13, bei der die induktiven Anordnungen (11) in regelmäßigen Abständen zueinander angeordnet sind und der Magnet (10) derart auf den Abstand zwischen den induktiven Anordnungen (11) abgestimmt ist, dass, wenn sich der Magnet (10) genau über einer induktiven Anordnung (11) befindet, nur der Ringkern (110) dieser induktiven Anordnung (11) gesättigt ist.

15. Anordnung nach Anspruch 14, bei der der Magnet (10) derart auf den Abstand zwischen den induktiven Anordnungen (11) abgestimmt ist, dass, wenn sich der Magnet (10) genau zwischen zwei induktiven Anordnungen (11) befindet, die Magnetkerne (110) beider induktiven Anordnungen (11) gesättigt sind.

16. Anordnung nach einem der vorhergehenden Ansprüche, bei der die Anordnung zusätzlich eine Multilayerplatine (13) umfasst, auf der die induktiven Anordnungen (11) angeordnet sind.

17. Anordnung nach Anspruch 16, bei der die Magnetkerne in einer Schicht einer Multilayerplatine realisiert sind.

18. Anordnung nach einem der Ansprüche 16 oder 17, bei der die Auswerteschaltung (12) ebenfalls auf der Multilayerplatine (13) angeordnet ist.

19. Anordnung nach einem der vorhergehenden Ansprüche, bei der auf der dem Magneten (10) abgewandten Seite der induktiven Anordnungen (11) ein weichmagnetisches Blech (14) angeordnet ist.

20. Anordnung nach Anspruch 19, bei der das weichmagnetische Blech (14) aus Mumetal besteht.

21. Anordnung nach Anspruch 19, bei der das weichmagnetische Blech (14) aus amorphen oder nanokristallinen Folien aufgebaut ist.

22. Anordnung nach einem der Ansprüche 19 bis 21, bei der das weichmagnetisches Blech (14) in einer Schicht einer Multilayerplatine realisiert ist.
